# FASCICULE DE BREVET EUROPEEN

(11) **EP 3 900 560 B1**
(45) Date de publication et mention de la délivrance du brevet: **07.06.2023**
(21) Numéro de dépôt: 21169981.4
(22) Date de dépôt: 22.04.2021
(51) Int. Cl.: A41D 13/11, A62B 23/02, B33Y 80/00, B29C 64/153, B29C 64/165, A62B 18/02

(54) **MASQUE DE PROTECTION FILTRANT**
FILTERSCHUTZMASKE
FILTERING PROTECTIVE MASK

(30) Priorité: 22.04.2020 FR 2004032; 30.04.2020 FR 2004345; 30.04.2020 FR 2004346
(43) Date de publication de la demande: 27.10.2021
(73) Titulaire: Dedienne Multiplasturgy Group, 27600 Saint-Aubin-sur-Gaillon (FR)
(72) Inventeur: LEDUC, Pierre-Jean, 27600 SAINT-AUBIN-SUR-GAILLON (FR); LARROUY, Frédéric, 27600 SAINT-AUBIN-SUR-GAILLON (FR); JACQUEMIN, Nicolas, 27600 SAINT-AUBIN-SUR-GAILLON (FR); CREPIN, Matthieu, 27600 SAINT-AUBIN-SUR-GAILLON (FR); MEUNIER, Eric, 27600 SAINT-AUBIN-SUR-GAILLON (FR)
(74) Mandataire: Cabinet Nony

(56) Documents cités:
- WO-A1-92/11888
- WO-A1-2012/089964
- WO-A2-2010/079380
- KR-A- 20050 093 641

## Description

### Domaine technique

La présente invention concerne un masque de protection filtrant.

### Technique antérieure

On connaît des masques de protection chirurgicaux, constitué d'une ou plusieurs couches de textile maintenues sur le visage de l'utilisateur par des élastiques. L'inconvénient de ces masques est qu'ils sont dédiés à un usage unique, et génèrent ainsi une quantité importante de déchets.

De plus, la qualité de la protection est relativement faible, ces masques étant destinés principalement à éviter les projections du porteur du masque sur son entourage.

Des masques avec une coque préformée existent par ailleurs. Ces masques présentent en principe un pouvoir filtrant amélioré, par exemple FFP2 ou FFP3, mais leur rigidité relative fait que l'interface avec la peau est souvent imparfaite, notamment pour certaines morphologies de visages. Des passages formés entre la peau et le bord du masque peuvent laisser fuiter l'air, ce qui réduit l'efficacité du masque et peut constituer une gêne pour les porteurs de lunettes en dirigeant l'air chaud expiré vers celles-ci, avec un risque de condensation.

Pour améliorer l'interface avec la peau, il est fréquent d'ajouter un insert métallique à conformer à la forme du nez ou un joint en mousse. Toutefois, ces éléments complexifient la fabrication du masque et son recyclage. De plus, de tels masques restent à usage unique.

Face à la pénurie actuelle de masques dans certains pays en raison de l'épidémie de COVID -19, il a été proposé de réaliser et d'utiliser des masques textiles lavables. Ces masques sont similaires par leurs qualités de filtration aux masques chirurgicaux basiques, et ne visent essentiellement qu'à protéger l'environnement de l'utilisateur des risques de projections du porteur. Leur nettoyage pour être satisfaisant impose de respecter des conditions particulières, notamment un séchage à haute température ou un repassage. De plus, ils sont souvent épais et de ce fait relativement lourds et inconfortables pour certains. Enfin, leur fabrication est difficile à automatiser, car nécessite des opérations de couture.

Il a été proposé sur certains forums d'utiliser les imprimantes 3D pour réaliser des masques en matière plastique agencés pour recevoir un matériau filtrant tel qu'un disque de coton et permettre son remplacement. Les masques proposés ont toutefois une coque dont la forme reproduit sensiblement celle des masques FFP2 existants, et s'avèrent relativement lourds et peu confortables à porter sur une longue période. De plus, ces masques sont destinés à une impression à l'unité, et leur prix de revient est incompatible avec une production de masse susceptible de répondre à la forte demande en période de crise sanitaire. Pour le confort à l'interface avec la peau, un joint en silicone est rapporté.

Les documents WO 2010079380 A, WO 9211888 A et KR 20050093641 A divulguent des masques de protection conventionnels.

GB2077112 décrit une masque facial destiné à être porté sur le visage d'un utilisateur et à assurer le filtrage d'impuretés particulières dans l'air, comprenant au moins une couche de matière plastique flexible perméable moulée généralement pour se conformer aux contours du visage de l'utilisateur et une couche de matière filtrante supportée par la couche de matière plastique flexible.

US2011253152 divulgue des fibres et des non-tissés fabriqués à partir de compositions de polyoléfines plastifiées.

KR101210662 présente un masque à gaz à cagoule amovible comprenant un écran et un masque nasal.

GB2566753 et WO9813103 décrivent des respirateurs faciaux configurés pour être disposés autour des yeux, du nez et de la bouche d'un porteur comprenant un masque ayant une partie transparente de visualisation et une coque configurée pour s'adapter sur le nez et la bouche d'un porteur.

### Exposé de l'invention

Il existe par conséquent un besoin pour bénéficier d'un masque qui soit à la fois confortable, permette une filtration efficace, réutilisable et facile à nettoyer, voire à stériliser et à recycler, et capable d'être produit facilement à grande échelle avec un coût compatible avec une large diffusion.

### Résumé de l'invention

L'invention vise à répondre à ce besoin et elle y parvient grâce à un masque de protection respiratoire selon la revendication 1.

Avantageusement, la partie arrière est réalisée avec une épaisseur de paroi relativement fine, de préférence comprise entre 0,15 et 0,5 mm, sur une partie de son pourtour au moins. Avantageusement également, les extrémités arrière des bossages sont éloignées du bord arrière de la coque.

Le masque selon l'invention présente de nombreux avantages.

Tout d'abord, sa forme est compatible avec une production par impression 3D par lots ou par moulage par injection. La matière utilisée pour la fabrication peut être choisie de façon à être compatible avec un passage au lave-vaisselle, voire être stérilisable en autoclave.

La faible épaisseur de matière de la partie arrière procure une grande souplesse à l'interface avec la peau, et l'arrière de la coque peut se déformer facilement pour s'adapter à la forme du visage. Ainsi, le risque de présence de fuites entre le masque et le visage est réduit, ce qui améliore la sécurité et le confort en réduisant le risque de projection sur les lunettes du porteur de l'air chaud expiré. La faible épaisseur de matière contribue également à la légèreté du masque et au confort du port de celui-ci. La présence des bossages latéraux dans des réalisations préférentielles contribue à rigidifier la coque à l'avant sans pour autant nuire outre mesure à la déformabilité de celle-ci à l'arrière. Le fait de rigidifier la coque à l'avant facilite la fixation de l'élément de maintien et facilite la manipulation du masque qui peut s'effectuer par le nez de celui-ci pour bien le positionner sur le visage, sans que l'utilisateur ne soit pénalisé par la souplesse de la partie arrière.

De préférence, la partie arrière est réalisée avec une épaisseur de paroi comprise entre 0,15 et 0,5 mm sur tout son pourtour, mieux comprise entre 0,15 et 0,4mm, encore mieux comprise entre 0,15 et 0,35mm, par exemple de 0,25mm.

La coque présente avantageusement une épaisseur de matière, sur son bord arrière en contact avec la peau, inférieure à 0,3mm.

La coque peut être avantageusement réalisée par impression 3D, en lots, avec une forme personnalisée, le cas échéant.

Dans un exemple de mise en oeuvre de l'invention, l'élément de maintien du matériau filtrant comporte une partie de fixation sur la coque, définissant un logement de réception du matériau filtrant, et une partie de retenue du matériau filtrant, configurée pour se fixer sur la partie de fixation. Le fait de rapporter l'élément de maintien sur la coque peut permettre de le réaliser de façon séparée, et faciliter la fabrication de la coque, notamment par impression 3D, en permettant d'empiler les coques lors de leur production.

La partie de retenue peut être configurée pour se fixer sur la partie de fixation de façon réglable, en pouvant être déplacée relativement à la partie de fixation jusqu'à obtenir le serrage recherché pour le matériau filtrant.

Cela peut permettre d'immobiliser une épaisseur variable de matériau filtrant, voire plusieurs une ou plusieurs couches de matériau filtrant, au choix de l'utilisateur, et selon l'efficacité de filtration recherchée. L'invention offre ainsi la possibilité d'utiliser un grand nombre de matériaux filtrants différents, réduisant d'autant le risque de pénurie.

De préférence, la partie de retenue est montée de manière imperdable, étant reliée par une charnière à la partie de fixation.

Le logement de réception du matériau filtrant est de préférence de contour circulaire, adapté à recevoir un disque de matériau filtrant. Ainsi, l'utilisateur peut utiliser comme matériau filtrant un disque de coton du type de ceux utilisés pour se démaquiller, facile à se procurer, ou tout autre substrat adapté.

La coque peut être formée à l'avant avec une grille venue de matière avec le reste de celle-ci. Cette grille offre une surface de réception plane pour le matériau filtrant et peut contribuer à rigidifier encore la coque à l'avant, dans la zone de réception de l'élément de maintien.

L'élément de maintien du matériau filtrant peut être agencé pour se monter par tout moyen sur la coque, par exemple par une fixation à pas de vis, cône sur cône ou de type baïonnette.

L'élément de maintien peut être agencé pour plaquer le matériau filtrant contre la coque une fois monté. Par exemple, la coque est réalisée avec une grille à l'avant, contre laquelle le matériau filtrant est plaqué par l'élément de maintien.

En variante, l'élément de maintien du matériau filtrant est agencé pour se fixer par l'intérieur sur la coque. Dans ce cas notamment, l'élément de maintien peut être sous forme de bague.

L'élément de maintien peut être agencé pour se fixer par l'extérieur sur la coque.

L'élément de maintien du matériau filtrant peut être agencé pour se fixer sur la coque en pinçant ou en plaquant le matériau filtrant contre la coque de manière à assurer son maintien.

De préférence, le masque comporte deux boutons venus de matière avec la coque, pour l'accrochage d'une bande élastique, de préférence unique, ces boutons présentant de préférence une tête ovale, allongée dans une direction perpendiculaire à la direction de traction de la bande élastique. Cela peut permettre d'utiliser une bande élastique pourvue de boutonnières, tout en facilitant le montage de cette bande et son maintien. La présence de boutonnières le long de la bande de maintien permet un réglage facile de la longueur de la bande élastique. La bande élastique peut être facilement enlevée si nécessaire pour faciliter le lavage du masque. Les boutons sont de préférence agencés sur la coque de manière à ne pas gêner l'empilage des masques pour la fabrication, et notamment les boutons peuvent s'engager dans la coque immédiatement sous une coque donnée de la pile.

Les bossages latéraux peuvent présenter la même épaisseur de matière que la partie arrière de la coque, au moins sur la majeure partie de leur longueur.

De préférence, la partie arrière de la coque se termine par un bord arrondi dirigé vers l'extérieur. L'arrondi permet d'éviter de blesser la peau et l'orientation vers l'extérieur préserve la souplesse de la partie arrière.

L'extrémité arrière des bossages peut être éloignée d'une distance (d) d'au moins 15mm du bord arrière de la coque. Cette distance est mesurée le long de la partie arrière.

Le rayon de courbure des bossages latéraux en leur sommet et à mi-longueur de ceux-ci est par exemple compris entre 20 et 30 mm. De préférence, ce rayon de courbure tend à croître en allant vers l'arrière, les bossages ayant de préférence une forme généralement conique.

Les bossages latéraux présentent de préférence une dépouille comprise entre 10 et 20°, mieux comprise entre 13 et 17°, par exemple de l'ordre de 15°. Une telle valeur permet d'optimiser la production des masques par impression 3D, en permettant de produire une pile d'un nombre élevé de coques dans la même cuve tout en évitant le risque de fusion des coques entre elles. La partie arrière présente alors notamment pour de telles valeurs d'angle de dépouille des bossages latéraux, une dépouille supérieure à celle des bossages latéraux, au moins sur les côtés.

De préférence, les bossages latéraux se raccordent à l'avant à un col plus épais, définissant au moins partiellement la zone de réception.

Le masque, et notamment au moins la coque, est de préférence réalisé en polyamide 11, incorporant éventuellement un agent biocide ou sur lequel a été appliqué un matériau biocide, par exemple sous forme de spray. Le matériau utilisé peut être choisi pour sa compatibilité avec le passage dans un lave-vaisselle et/ou sa stérilisation en autoclave.

La coque peut être réalisée dans un matériau thermo-formable pouvant être amené par chauffage au-delà d'une température donnée dans un état lui permettant de se déformer de manière permanente sous contrainte mécanique, ce qui permet de conformer le masque à la forme du visage en le chauffant puis le pressant sur le visage alors qu'il est encore suffisamment chaud, ledit matériau présentant une température de fléchissement sous contrainte supérieure ou égale à 30°C (norme ISO75f HDT sous 1,8 MPa) et de préférence inférieure ou égale à 60°C, mieux comprise entre 40 et 50°C.

De cette manière, il est possible de réaliser un masque anatomique ou à tout le moins de rendre le masque plus anatomique, sans avoir à réaliser une acquisition préalable de données 3D ni générer un fichier d'impression 3D spécifique. Le matériau est de préférence choisi pour offrir une tenue à la température permettant au masque de résister à un lavage au lave-vaisselle à 70°C ou à une stérilisation en autoclave. La conformation du masque peut s'effectuer très facilement, car il suffit de chauffer le masque à une température suffisante puis de l'appliquer sur le visage pour qu'il se déforme à son contact de manière permanente et garde ensuite, après refroidissement, une forme épousant mieux celle du visage. Ladite température donnée peut être comprise entre 80 et 100°C, ce qui permet de chauffer facilement le masque avec de la vapeur ou de l'eau à ébullition.

Avantageusement, la coque présentant un bord libre destiné à contacter la peau relativement fin, de préférence d'épaisseur inférieure ou égale à 0,6 mm, mieux inférieure ou égale à 0,5 mm, encore mieux inférieure ou égale à 0,4 mm. La finesse du bord arrière limite l'inertie thermique et permet malgré la température relativement élevée à laquelle le masque est chauffé, d'éviter le risque d'inconfort lors l'opération de conformation.

Le matériau thermo-formable utilisé peut être relativement rigide et présenter un module de flexion mesuré selon ISO178(23°C) supérieur ou égal à 600 MPa, mieux à 700 MPa, encore mieux à 800 MPa, encore mieux supérieur ou égale à 1000 MPa, notamment compris entre 1000 et 2000 MPa, par exemple de l'ordre de 1200 MPa. Le matériau thermo-formable utilisé peut présenter une température de fusion mesurée selon la norme ISO11357 supérieure ou égale à 170°C, notamment comprise entre 170 et 200°C. Le matériau thermo-formable utilisé peut présenter une dureté Shore D mesurée selon la norme ISO868 supérieure ou égale à 70, notamment comprise entre 70 et 85. Le matériau thermo-formable utilisé peut présenter une densité comprise entre 1 et 1,3.

Un tel matériau thermo-formable peut être utilisé sous forme de poudre dans une technique de fabrication additive et le masque peut ainsi être facilement réalisé par impression 3D dans ce matériau.

La coque peut présenter à l'avant une ouverture permettant le passage d'air avec l'intérieur du masque et le masque peut comporter une visière de protection amovible, en matière plastique transparente, traversée par une décoque permettant de la fixer sur l'avant du masque, de telle sorte que l'ouverture du masque débouche du côté extérieur de la visière. Ainsi, l'ensemble de visage peut être protégé ou non, en fonction des besoins.

De préférence, la visière couvre sensiblement l'ensemble du visage, et notamment couvre le menton et au moins une partie du front.

De préférence, le masque comporte un élément de maintien de la visière fixé de façon amovible sur une zone de réception correspondante du masque.

La visière peut être séparée du masque pour permettre une utilisation du masque seul.

L'invention a encore pour objet un procédé de fabrication d'un masque tel que défini ci-dessus, dans lequel la technique de fabrication du masque est une technique de fabrication additive. En particulier, un lot de plusieurs masques empilés peut ainsi être réalisé dans une même cuve de fabrication.

La technique de fabrication additive permet aussi une personnalisation de la forme de la coque. On peut ainsi générer un fichier permettant de commander une imprimante 3D utilisée pour la fabrication de la coque, à partir d'informations sur la morphologie de la personne destinée à porter le masque, en particulier à partir d'un scan 3D au moins partiel du visage de celle-ci.

L'invention a encore pour objet un procédé de fabrication d'un masque selon l'invention dans lequel la coque est réalisée par moulage par injection. Dans ce cas, il est avantageux de mouler avec la coque l'élément de maintien. Ce dernier est par exemple relié à la coque par une charnière ou par un ou plusieurs ponts de matière sécables.

L'invention a encore pour objet un procédé de nettoyage d'un masque selon l'invention, dans lequel on retire le matériau filtrant et éventuellement la bande élastique, et l'on procède au lavage du masque dans un lave-vaisselle. Un nouveau matériau filtrant peut être mis en place sur le masque propre.

Le masque peut également être réalisé dans un matériau apte à une stérilisation en autoclave, le cas échéant.

L'invention a encore pour objet un procédé de conformation anatomique d'un masque selon l'invention comportant une coque réalisée dans un matériau thermo-formable, comportant les étapes consistant à :
- Chauffer le masque pour amener au moins une partie du matériau constitutif de la coque dans un état lui permettant de prendre une déformation permanente sous contrainte mécanique,
- alors que le matériau est dans cet état, plaquer le masque contre le visage de manière à le conformer à la forme de celui-ci.

De préférence, le masque est chauffé à une température comprise entre 80°C et 100°C avant d'être appliqué sur le visage. Par exemple, le masque est chauffé en étant placé au-dessus d'une casserole remplie d'eau à ébullition. En particulier, le masque peut être posé par son nez sur une grille couvrant la casserole, et laissé ainsi le temps suffisant pour que la vapeur ramollisse la paroi fine, par exemple une trentaine de secondes.

Le fait de poser le masque par son nez, plus épais, sur la grille lui permet de ne pas s'affaisser sous l'effet de la chaleur.

Le masque peut alors être saisi par l'arrière, puis plaqué contre la peau, en attendant le cas échéant quelques secondes avant le contact avec le la peau pour que la température de surface de la partie arrière diminue et n'occasionne pas de sensation d'inconfort chez les personnes sensibles. Le masque chaud peut être plaqué pendant quelques secondes, par exemple entre 1 et 10s, contre le visage.

Une fois refroidi, le masque conserve sa nouvelle forme, et devient plus anatomique.

L'invention a encore pour objet, indépendamment et/ou en combinaison avec ce qui précède, selon un autre de ses aspects, un masque respiratoire à disposer sur le visage, notamment un masque filtrant de protection respiratoire, comportant une coque en matière plastique à placer sur le visage, cette coque étant réalisée dans un matériau thermo-formable pouvant être amené par chauffage au-delà d'une température donnée dans un état lui permettant de se déformer de manière permanente sous contrainte mécanique, ce qui permet de conformer le masque à la forme du visage en le chauffant puis le pressant sur le visage alors qu'il est encore suffisamment chaud, ledit matériau présentant une température de fléchissement sous contrainte supérieure ou égale à 30°C (norme ISO75f HDT sous 1,8 MPa) et la coque présentant un bord libre destiné à contacter la peau relativement fin, de préférence d'épaisseur inférieure ou égale à 0,6 mm, mieux inférieure ou égale à 0,5 mm, encore mieux inférieure ou égale à 0,4 mm.

L'invention permet selon cet aspect de réaliser un masque anatomique ou à tout le moins de rendre le masque plus anatomique, sans avoir à réaliser une acquisition préalable de données 3D ni générer un fichier d'impression 3D spécifique. Le matériau est de préférence choisi pour offrir une tenue à la température permettant au masque de résister à un lavage au lave-vaisselle à 70°C ou à une stérilisation en autoclave.

La conformation du masque peut s'effectuer très facilement, car il suffit de chauffer le masque à une température suffisante puis de l'appliquer sur le visage pour qu'il se déforme à son contact de manière permanente et garde ensuite, après refroidissement, une forme épousant mieux celle du visage. Ladite température donnée peut être comprise entre 80 et 100°C, ce qui permet de chauffer facilement le masque avec de la vapeur ou de l'eau à ébullition. La finesse du bord arrière limite l'inertie thermique et permet malgré la température relativement élevée à laquelle le masque est chauffé, d'éviter le risque d'inconfort lors l'opération de conformation.

L'invention a encore pour objet, indépendamment et/ou en combinaison avec ce qui précède, selon un autre de ses aspects, un système de protection individuel, comportant :
- un masque de protection filtrant comportant une coque en matière plastique à placer sur le visage, présentant à l'avant une ouverture permettant le passage d'air avec l'intérieur du masque,
- une visière de protection amovible, en matière plastique transparente, traversée par une découpe permettant de la fixer sur l'avant du masque, de telle sorte que l'ouverture du masque débouche du côté extérieur de la visière.

L'invention selon cet aspect permet un montage amovible de la visière. Le fait que la respiration se fasse à travers la découpe de la visière élimine tout risque de buée. La visière peut facilement être adaptée à couvrir l'ensemble du visage, et de plus sa fixation peut se faire sur le masque à une certaine distance du visage, ce qui facilite le port de lunettes.

La visière peut être immobilisée relativement au masque par divers moyens. De préférence, la découpe de la visière est non circulaire et coopère avec une forme également non circulaire du masque de manière à immobiliser la visière en rotation sur elle-même autour de l'axe de la découpe. On obtient de cette façon une bonne immobilisation de la visière, sans complexifier outre mesure la fabrication de celle-ci.

### Brève description des dessins

L'invention pourra être mieux comprise à la lecture de la description détaillée qui va suivre, d'exemples de mise en oeuvre non limitatifs de celle-ci, et à l'examen du dessin annexé, sur lequel :
[Fig 1] la figure 1 représente en perspective un exemple de masque selon l'invention,
[Fig 2] la figure 2 est une vue analogue à la figure 1 du masque après ouverture de l'élément de maintien du matériau filtrant, ce dernier étant représenté avant insertion dans son logement,
[Fig 3] la figure 3 représente le masque avant montage de l'élément de maintien sur la coque,
[Fig 4] la figure 4 est une coupe de la coque dans un plan transversal,
[Fig 5] la figure 5 illustre le montage de la bande élastique sur la coque,
[Fig 6] la figure 6 est une coupe partielle selon l'axe du logement de réception du matériau filtrant,
[Fig 7] la figure 7 représente de manière partielle et schématique en coupe le bord arrière de la coque,
[Fig 8] la figure 8 représente un détail de la zone de réception,
[Fig 9] la figure 9 est une vue de côté illustrant le positionnement des boutons d'accrochage de la bande élastique,
[Fig 10] la figure 10 est une vue éclatée d'une première variante de masque selon l'invention,
[Fig 11] la figure 11 est une vue éclatée d'une deuxième variante de masque selon l'invention,

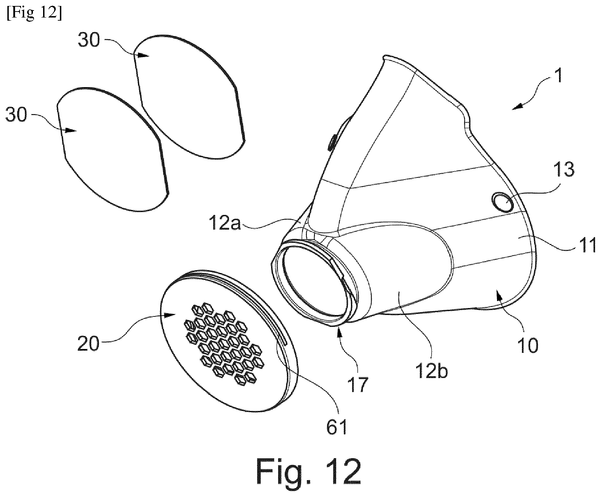

[Fig 12] la figure 12 est une vue éclatée d'une troisième variante de masque selon l'invention,
[Fig 13] la figure 13 représente en perspective une variante de masque,
[Fig 14] la figure 14 représente en élévation une pile de coques de masques telle qu'obtenue par fabrication additive, et
[Fig 15] la figure 15 représente en perspective un autre exemple de masque selon l'invention.

### Description détaillée

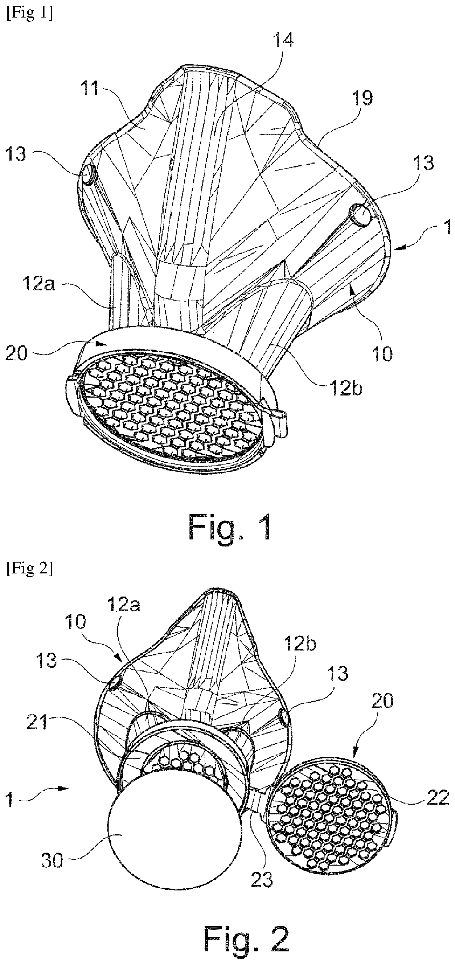

On va maintenant décrire en référence aux figures 1 à 8 un exemple de masque 1 selon l'invention.

Ce dernier comporte une coque 10 à appliquer sur le visage, portant un matériau filtrant 30, visible sur la figure 2 notamment, maintenu en place par un élément de maintien 20 rapporté sur la coque 10 dans une zone de réception 17.

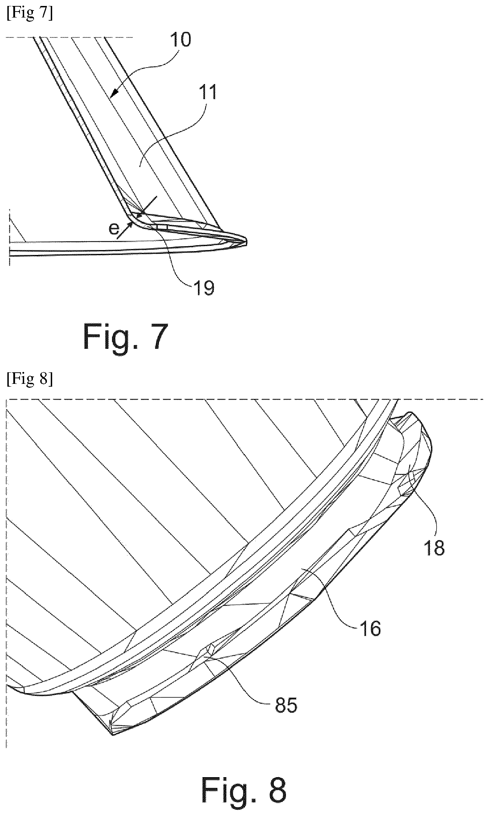

La coque 10 présente une partie arrière 11 souple de forme générale évasée vers l'arrière, terminée par un bord 19 visible sur la figure 7, arrondi et dirigé vers l'extérieur.

Le dessus de la coque 10 forme une zone plus étroite 14, destinée à épouser la forme de l'arête du nez.

Le coque 10 présente à l' avant deux bossages 12a et 12b de forme généralement conique, s'évasant vers l'arrière avec une dépouille d'une quinzaine de degrés environ par rapport à l'axe X de la partie avant. Le rayon de courbure R de chaque bossage 12a ou 12b augmente ainsi vers l'arrière, étant par exemple de l'ordre d'une vingtaine de mm à mi-longueur des bossages, quand on progresse de l'avant vers l'arrière.

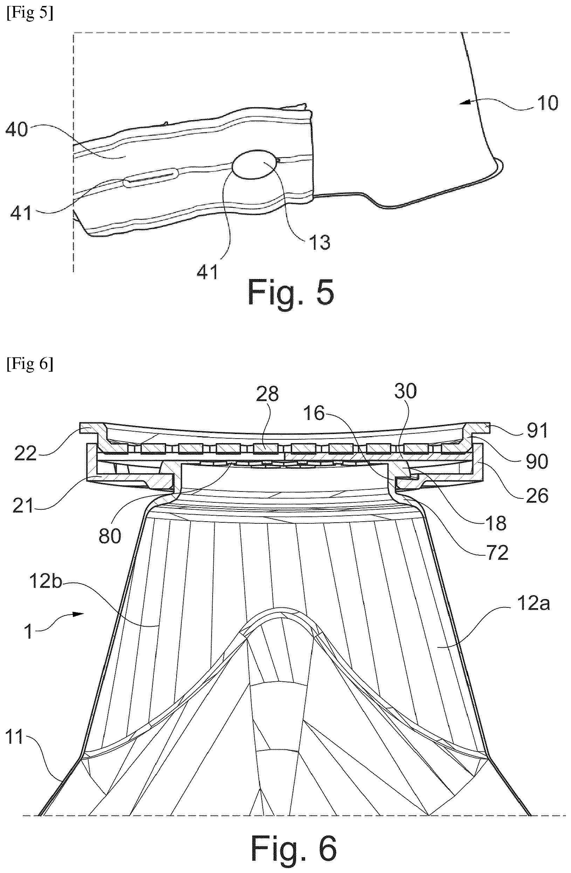

Les bossages 12a et 12b se raccordent à la partie arrière 11 de la coque selon une ligne de jonction 70 éloignée d'une distance d du bord arrière 19 de la coque 10, comme visible sur la figure 8 notamment. Cette distance d est par exemple de l'ordre d'une vingtaine de mm. La partie arrière 11 présente, dans le prolongement des bossages 12a et 12b vers l'arrière, une dépouille plus importante, comme on peut le voir sur la figure 6.

Les bossages 12a et 12b se rejoignent à l'avant à un col 16 en formant un épaulement 72. Le col 16 est terminé par une collerette 18 participant au montage de l'élément de maintien 20.

Dans l'exemple considéré, le col 16 supporte une grille 80 contre laquelle le matériau filtrant 30 vient en appui par une face, comme on peut le voir sur la figure 6 plus particulièrement.

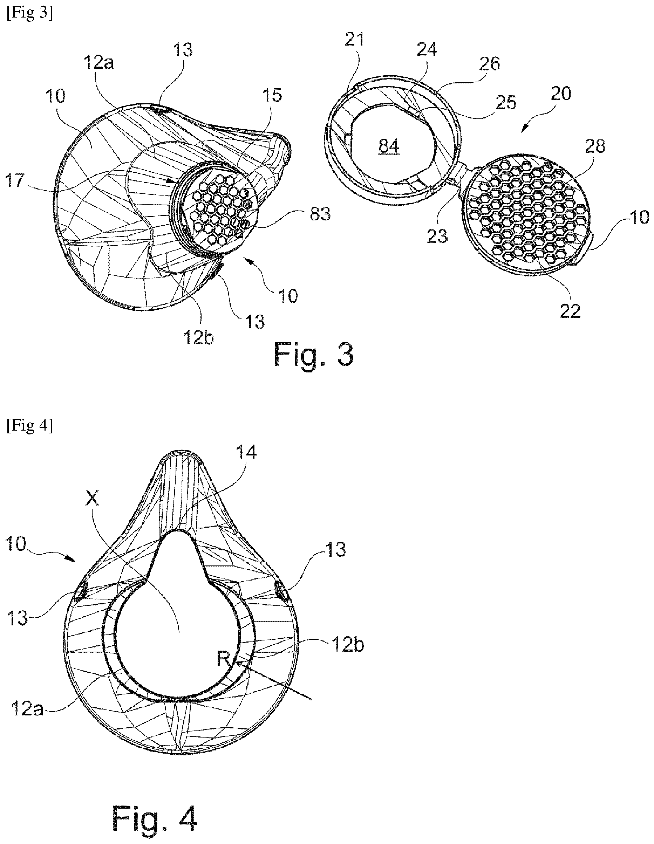

La collerette 18 présente un contour circulaire avec des méplats 83, au nombre de trois, disposés à 120° les uns des autres, comme on peut le voir sur la figure 3.

L'élément de fixation 20 présente, comme cela est visible sur cette figure également, une partie de fixation 21 agencée pour se fixer sur le col 16, et une partie de maintien 22, reliée par une charnière 23 à la partie de fixation 21. Cette dernière présente une paroi définissant une ouverture 84 à engager sur le col 16. L'ouverture 84 présente un contour circulaire avec des méplats 24 et des butées d'immobilisation 25. La collerette 18 est munie sur sa face tournée vers l'arrière de crans correspondants 85, destinés à coopérer avec les butées 25 pour bloquer la rotation de la partie de fixation 21 au terme de son montage sur le col 16.

La partie de maintien 22 présente une grille 28 entourée par un bord relevé 90, lui-même terminé par un rebord 91 dirigé vers l'extérieur.

Le masque 1 est maintenu sur la tête de l'utilisateur par une bande élastique 40, visible sur la figure 5 seulement, non représentée sur les autres figures.

Cette bande 40 est pourvue d'au moins une boutonnière 41 à chaque extrémité, et mieux de boutonnières 41 réparties sur toute sa longueur à intervalles régulier.

La coque 10 est réalisée avec deux boutons 13 pour l'accrochage de la bande 40. Chaque bouton 13 présente une tête de section ovale, de grand axe orienté sensiblement perpendiculairement à la ligne de traction préconisée de la bande élastique 40 sur la coque 10, la tête étant reliée à la coque par une tige de plus faible section. Pour accrocher la bande 40 sur le bouton 13, l'utilisateur oriente la boutonnière 41 sensiblement selon le grand axe de la tête du bouton 13, comme illustré sur la figure 5.

La présence d'un seul point de traction sur la coque 10 de chaque côté de celle-ci à une distance relativement faible du bord arrière 19, par exemple inférieure à 15mm, évite de plisser sa paroi et réduit ainsi le risque de création d'un passage d'air entre le bord arrière 19 de la coque 10 et la peau du visage. De préférence, chaque bouton 13 est positionné sur la coque 10 de telle sorte que lorsque le masque est observé de côté, l'angle formé entre l'axe X du col 16 et la ligne L joignant le centre du bouton 13 avec l'intersection de l'axe X du col 16 et de la face avant de la grille 80, soit compris entre 10 et 20°, étant par exemple proche de 15° environ, comme illustré à la figure 8. L'orientation de la traction de la bande élastique permet de plaquer le masque sur le visage, la bande élastique passant au-dessus des oreilles du porteur du masque.

La partie arrière 11 de la coque 10 est réalisée avec une épaisseur e de matière relativement faible, de préférence inférieure ou égale à 0,3mm, par exemple égale à 0,25mm.

Cette très faible épaisseur est présente dans l'exemple illustré sur tout le pourtour de la partie arrière 11, y compris sur l'arrondi du bord arrière 19, ce qui confère une très grande souplesse au masque et une bonne adaptabilité à la morphologie du visage.

Les bossages 12a et 12b peuvent être réalisés avec la même épaisseur de matière que la partie arrière 11 jusque dans la zone formant épaulement 72 où la paroi de la coque 10 devient plus épaisse.

Le masque 1 illustré convient tout particulièrement à une fabrication additive, mais l'invention n'est pas limitée à la fabrication du masque par une technologie d'impression 3D et la coque peut encore être réalisée par moulage par injection.

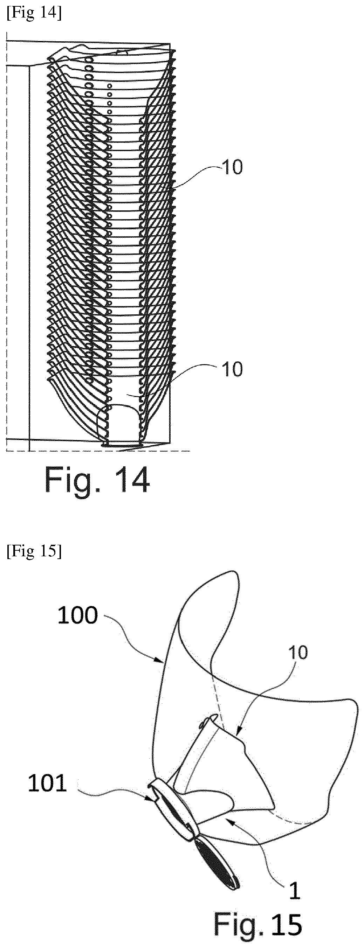

Dans le cadre d'une fabrication additive, plusieurs coques peuvent être réalisées au sein d'un même lot de fabrication, dans une même cuve de fabrication, dans une configuration où les masques sont empilés, comme illustré sur la figure 14. Un angle de dépouille des bossages 12a et 12b d'une quinzaine de degrés permet d'obtenir un bon compromis entre le nombre de coques pouvant être fabriquées dans cette configuration empilées et l'absence de fusion de matière non désirée entre coques adjacentes. L'imprimante 3D utilisée est par exemple une imprimante de type Multi Jet Fusion de la société Hewlett Packard mais l'invention n'est pas limitée à une technologie particulière de fabrication additive et d'autres technologies de fabrication additive, par exemple de type SLS, peuvent être utilisées.

On peut fabriquer dans un même lot des coques 10 identiques, en jouant sur l'adaptabilité du masque 1 à la forme du visage grâce à la grande déformabilité de la coque 10.

On peut aussi personnaliser la forme de la coque 10 à la morphologie du visage du porteur, en dessinant sur mesure le contour de la coque 10 pour tenir compte de la forme du visage.

Dans ce cas, l'utilisateur peut adresser au moins deux photographies de face et de profil de son visage, voire un scan plus complet réalisé en filmant à 180° son visage, et la forme optimale à donner à la coque 10 est générée à partir de ces informations. On peut notamment jouer sur la dépouille de la partie arrière 11 et sa longueur, d'un masque à l'autre, en fonction de la forme du visage.

Le matériau dans lequel la coque 10 peut être réalisée est par exemple un polyamide, de préférence un polymère biosourcé tel que le polyamide 11.

Le cas échéant, le matériau polymère du masque comporte un agent biocide. En variante, le masque est revêtu, par exemple par pulvérisation, d'un revêtement biocide.

L'élément de maintien 20 peut être réalisé par la même technique de fabrication additive que la coque 10, ou en variante par une technique de fabrication différente, par exemple par moulage par injection.

Le fait de réaliser l'élément de maintien 20 sous la forme d'une pièce séparée permet d'empiler les coques 10, et ainsi de gagner en productivité dans le cas d'une fabrication additive.

Pour assembler le masque 1, la partie de fixation 21 est engagée sur le col 16 à l'avant, et verrouillée sur celui-ci en la faisant tourner.

On aboutit alors à la configuration illustrée à la figure 6, avec méplats 24 engagés dans la gorge formée entre la collerette 18 et l'épaulement 72 à la base du col 16.

Le matériau filtrant 30 peut ensuite être mis en place dans son logement, délimité par le montant 26 présent à la périphérie de la partie de fixation 21, comme illustré à la figure 6.

Dans l'exemple illustré, le matériau filtrant 30 est un disque en coton, de type utilisé pour se démaquiller. On peut utiliser tout type de matériau filtrant, et notamment à pouvoir de filtration renforcé, par exemple de type FFP2.

Le matériau filtrant vient en appui par une face contre la grille 80 et est maintenu pressé contre celle-ci par la grille 28 de la partie de retenue 22, lorsque cette dernière est rabattue contre la partie de fixation 21. La partie de retenue 22 est fixée dans la partie de fixation 21, dans l'exemple considéré, par serrage de son bord relevé 90 contre le montant 26. Ainsi, la partie de retenue 22 peut être enfoncée plus ou moins dans la partie de fixation 21 jusqu'au serrage désiré du matériau filtrant 30. Le serrage du bord de la partie de retenue 22 contre le montant 26 permet à la fois d'obtenir un montage relativement étanche forçant l'air à traverser le matériau étanche, et d'autre part de permettre un montage avec un degré de liberté dans l'axe X, permettant d'accueillir des matériaux filtrants plus ou moins épais, voire plusieurs épaisseurs de matériaux filtrants, de même nature ou non.

Lors de l'utilisation, la coque 10 peut subir une déformation d'ensemble lui permettant d'épouser la forme du visage de l'utilisateur, grâce à la souplesse de la partie arrière 11, réalisée avec une très faible épaisseur, cette souplesse n'étant pas contrariée outre mesure par la présence de bossages 12a et 12b qui s'étendent en retrait du bord arrière 19. L'arrondi vers l'extérieur que forme ce dernier permet d'accroître la surface d'appui contre la peau et évite ainsi de blesser celle-ci, sans pour autant apporter trop de rigidité à la partie arrière du fait de l'orientation vers l'extérieur de ce bord. La faible épaisseur de matière de la coque rend le masque léger et contribue également au confort du masque, de même que la largeur de la bande élastique unique.

Après utilisation, le matériau filtrant 30 peut être retiré. Pour ce faire, l'utilisateur ouvre le logement qui le contient en tirant sur la partie de retenue 22, cette opération étant facilitée par la présence du rebord 91 qui dépasse légèrement vers l'extérieur du montant 26.

Ensuite, le masque peut être nettoyé en étant placé dans un lave-vaisselle par exemple. On peut éventuellement retirer la bande élastique avant de placer le masque dans le lave-vaisselle.

L'invention n'est pas limitée à l'exemple qui vient d'être décrit, et de nombreuses modifications peuvent être apportées à l'invention sans sortir de son cadre.

Par exemple, l'élément de maintien 20 peut être réalisé différemment.

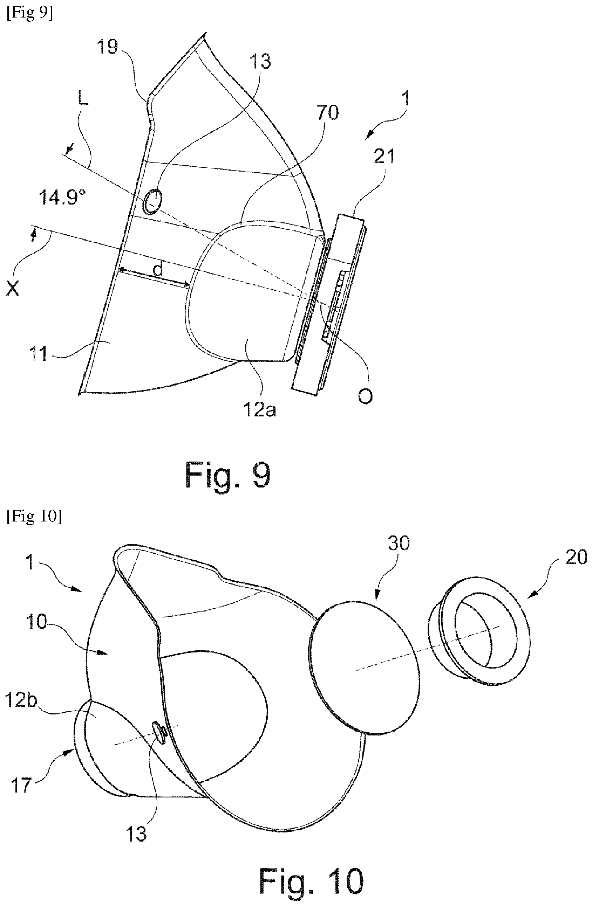

A titre d'exemple, on a représenté à la figure 9 une variante de masque 1 dans laquelle le matériau filtrant est maintenu dans la zone de réception de celui-ci par un élément de maintien 20 sous la forme d'une bague engagée à l'intérieur du masque 1 par l'arrière, et venant pincer le matériau filtrant à sa périphérie contre un siège correspondant de forme cylindrique, formé dans une zone de réception 17 interne, à l'avant de la coque 10.

Dans la variante illustrée à la figure 10, l'élément de maintien 20 se présente sous la forme d'un capot qui est engagé par l'avant du masque sur la zone de réception 17, et vient serrer le matériau filtrant 30 sur un siège correspondant, de forme cylindrique de révolution. Sur cette figure, on a illustré la possibilité de superposer plusieurs épaisseurs de matériau filtrant 30.

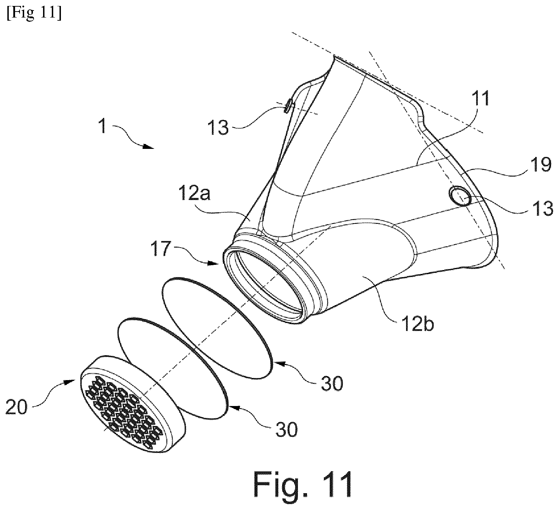

Dans l'exemple de la figure 11, l'élément de maintien 20 est agencé pour se fixer sur un col formé à l'avant de la coque 10 dans la zone de réception 17, par tout moyen, par exemple par vissage, friction, notamment cône sur cône, encliquetage ou fixation de type baïonnette. Une fixation procurant un serrage du matériau filtrant lors de la fixation de l'élément de maintien, tel qu'une fixation de type quart de tour, est avantageuse.

L'élément de maintien 20 présente un logement défini entre deux parois, débouchant à l'extérieur par une fente 61 permettant l'introduction du matériau filtrant 30 entre elles. L'élément de maintien 20 peut présenter une grille contre laquelle est serré le matériau filtrant 30 par le bord avant du col.

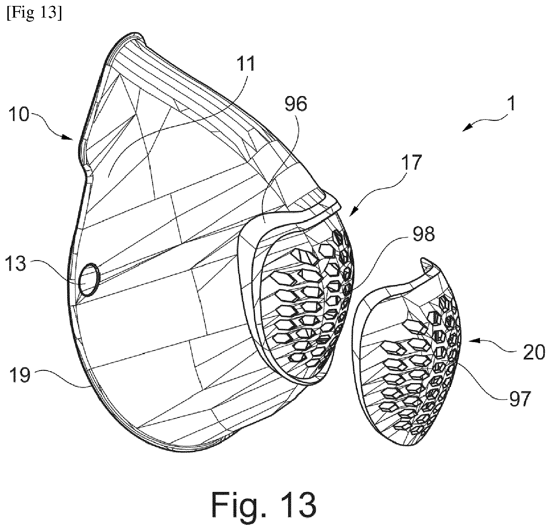

Dans la variante illustré à la figure 13, la coque 10 est réalisée sans les bossages latéraux, avec une grille 98 à l'avant, bordé par un bourrelet de renfort 96 qui s'étend tout autour de la zone de réception 17 de l'élément de maintien 20. Ce dernier est formé avec une grille 97, et le matériau filtrant (non représenté sur cette figure) est mis en place sur la grille 98 avant de rapporter l'élément de maintien 20 sur celle-ci. La fixation de l'élément de maintien s'effectue par exemple par encliquetage ou par tout autre moyen adapté. Dans le cas où la coque 10 est réalisée par fabrication additive, il est avantageux de réaliser l'élément de maintien sous la forme d'une pièce réalisée séparément, de façon à permettre la fabrication des coques sous une forme empilée. Dans le cas d'une fabrication par injection de la coque, il peut être avantageux de mouler l'élément de maintien 20 en même temps que la coque 10 et dans le même moule, l'élément de maintien 20 étant alors relié à la coque par un pont de matière formant charnière par exemple, permettant de le rabattre sur la zone de réception 17. Dans l'exemple de la figure 13, la partie arrière 11 de la coque 10 peut être réalisée avec la même forme que celle des coques des exemples de réalisation précédemment décrits, et notamment avec une fine épaisseur de paroi au niveau en particulier du bord arrière 19. Dans le cas d'une réalisation par moulage par injection, il peut être avantageux d'utiliser pour réaliser la coque 10 un élastomère thermoplastique.

Bien entendu, la forme de la coque et celle de l'élément de maintien peut être encore modifiée dans d'autres variantes, non illustrées. L'élément de maintien peut être réalisé de manière indépendante de la coque, comme illustré, ou en variante avec la coque en étant relié à celle-ci par un pont de matière, sécable ou non, tel qu'une charnière par exemple, permettant de rapporter ensuite l'élément sur la zone de réception prévue à cet effet sur la coque. On peut encore utiliser dans certaines variantes comme élément de maintien un joint torique, engagé sur un siège correspondant réalisé à l'avant de la coque.

Dans un mode de réalisation, la coque est réalisée dans un matériau thermo-formable pouvant être amené par chauffage au-delà d'une température donnée dans un état lui permettant de se déformer de manière permanente sous contrainte mécanique, ce qui permet de conformer le masque à la forme du visage en le chauffant puis le pressant sur le visage alors qu'il est encore suffisamment chaud, ledit matériau présentant une température de fléchissement sous contrainte supérieure ou égale à 30°C (norme ISO75f HDT sous 1,8 MPa) et de préférence inférieure ou égale à 60°C, mieux comprise entre 40 et 50°C

Dans ce cas, le masque peut être conformé à chaud, avant la première utilisation, à la forme du visage de l'utilisateur.

Pour ce faire, on place par exemple le masque au-dessus d'une casserole remplie d'eau à ébullition. Le masque est posé par son nez sur une grille couvrant la casserole, et laissé ainsi le temps suffisant pour que la vapeur ramollisse la paroi de la coque, notamment dans la partie arrière et au niveau de la ligne délimitant les bossages à l'arrière, la durée de chauffage étant par exemple d'une trentaine de secondes.

Le fait de poser le masque par son nez, plus épais, sur la grille lui permet de ne pas s'affaisser sous l'effet de la chaleur.

Le masque peut alors être saisi par l'arrière, puis plaqué contre la peau, en attendant le cas échéant quelques secondes avant le contact avec la peau pour que la température de surface de la partie arrière diminue et n'occasionne pas de sensation d'inconfort chez les personnes ayant la peau sensible. Toutefois, lorsque que la paroi de la partie arrière du masque est fine, l'inertie thermique est faible et le refroidissement de la partie la plus fine venant au contact de la peau est rapide. Le masque chaud peut être plaqué pendant quelques secondes, par exemple entre 1 et 10s, contre le visage.

Une fois refroidi, le masque conserve sa forme, et devient plus anatomique.

Dans un autre mode de réalisation, illustré sur la figure 15, la coque 10 présente à l'avant une ouverture 101 permettant le passage d'air avec l'intérieur du masque 1 et le masque 1 comporte une visière 100 de protection amovible, en matière plastique transparente, traversée par une décoque permettant de la fixer sur l'avant du masque 1, de telle sorte que l'ouverture du masque 1 débouche du côté extérieur de la visière 100.

L'invention est définie dans les revendications.

## Revendications

1. Masque (1) de protection respiratoire, comportant :
- une coque (10) en matière plastique à placer sur le visage, cette coque comportant une partie avant pourvue d'une zone de réception (17) d'un élément de maintien d'un matériau filtrant (30),
**caractérisé en ce que** la coque comporte une partie arrière souple (11) sans joint rapporté, ayant un bord arrière (19) adapté à épouser la forme du visage, la partie arrière (11) étant réalisée avec une épaisseur (e) de paroi comprise entre 0.15 et 0.5 mm sur une partie de son pourtour au moins.

2. Masque selon la revendication 1, la partie avant comportant deux bossages latéraux (12a, 12b) dont les extrémités arrière (70) sont éloignées du bord arrière (19) de la coque et qui se raccordent à l'avant à ladite zone de réception (17).

3. Masque selon l'une des revendications 1 et 2, la partie arrière (11) étant réalisée avec une épaisseur de paroi comprise entre 0,15 et 0,5 mm sur tout son pourtour, mieux comprise entre 0,15 et 0,4mm, encore mieux comprise entre 0,15 et 0,35mm et/ou la coque (10) ayant une épaisseur de matière, sur son bord arrière (19) en contact avec la peau, inférieure à 0,3mm et/ou la partie arrière de la coque se terminant par un bord arrondi (19) dirigé vers l'extérieur.

4. Masque selon l'une quelconque des revendications précédentes, l'élément de maintien (20) du matériau filtrant (30) comportant une partie (21) de fixation sur la coque (10), définissant un logement de réception du matériau filtrant, et une partie de retenue (22) du matériau filtrant, configurée pour se fixer sur la partie de fixation, la partie de retenue (22) étant de préférence reliée par une charnière (23) à la partie de fixation (21), le logement de réception du matériau filtrant (30) étant de préférence de contour circulaire, adapté à recevoir un disque de matériau filtrant.

5. Masque selon l'une quelconque des revendications précédentes, la coque (10) étant formée à l'avant avec une grille (80 ; 98) venue de matière avec le reste de celle-ci.

6. Masque selon l'une quelconque des revendications précédentes, l'élément de maintien (20) du matériau filtrant (30) étant agencé pour se monter sur la coque par une fixation à pas de vis, par encliquetage, cône sur cône ou de type baïonnette.

7. Masque selon l'une quelconque des revendications précédentes, l'élément de maintien (20) étant agencé pour plaquer le matériau filtrant (30) contre la coque (10) une fois monté.

8. Masque selon l'une quelconque des revendications 1 à 3, l'élément de maintien du matériau filtrant étant agencé pour se fixer par l'intérieur sur la coque, l'élément de maintien (20) étant de préférence sous forme de bague, l'élément de maintien (20) du matériau filtrant étant de préférence agencé pour se fixer sur la coque en pinçant ou en plaquant le matériau filtrant contre la coque de manière à assurer son maintien.

9. Masque selon l'une quelconque des revendications 1 à 3, l'élément de maintien étant agencé pour se fixer par l'extérieur sur la coque, l'élément de maintien (20) du matériau filtrant étant de préférence agencé pour se fixer sur la coque en pinçant ou en plaquant le matériau filtrant contre la coque de manière à assurer son maintien.

10. Masque selon l'une quelconque des revendications précédentes, comportant deux boutons (13) venus de matière avec la coque, pour l'accrochage d'une bande élastique (40), de préférence unique, ces boutons présentant de préférence une tête ovale, allongée dans une direction perpendiculaire à la direction de traction de la bande élastique.

11. Masque selon l'une quelconque des revendications précédentes, avec un rattachement à la revendication 2, l'extrémité arrière des bossages (12a, 12b) étant éloignée d'une distance (d) d'au moins 15mm du bord arrière (19) de la coque, et/ou le rayon de courbure (R) des bossages latéraux (12a, 12b) en leur sommet et à mi-longueur de ceux-ci étant compris entre 20 et 30 mm, et/ou
les bossages latéraux (12a, 12b) présentant la même épaisseur de matière que la partie arrière (11) de la coque, au moins sur la majeure partie de leur longueur, et/ou
les bossages latéraux (12a, 12b) présentant une dépouille comprise entre 10 et 20° et/ou
la partie arrière (11) présentant une dépouille supérieure à celle des bossages latéraux (12a, 12b), au moins sur les côtés, et/ou
les bossages latéraux (12a, 12b) se raccordant à l'avant à un col (16) plus épais, définissant au moins partiellement la zone de réception (17).

12. Masque selon l'une quelconque des revendications précédentes, la coque au moins étant réalisée en polyamide 11, incorporant éventuellement un agent biocide, la coque étant de préférence réalisée dans un matériau pouvant passer au lave-vaisselle et/ou stérilisable en autoclave.

13. Masque selon l'une quelconque des revendications précédentes, la coque présentant à l'avant une ouverture permettant le passage d'air avec l'intérieur du masque et le masque comportant une visière de protection amovible, en matière plastique transparente, traversée par une découpe permettant de la fixer sur l'avant du masque,
de telle sorte que l'ouverture du masque débouche du côté extérieur de la visière, et /ou la coque étant réalisée dans un matériau thermo-formable pouvant être amené par chauffage au-delà d'une température donnée dans un état lui permettant de se déformer de manière permanente sous contrainte mécanique, ce qui permet de conformer le masque à la forme du visage en le chauffant puis le pressant sur le visage alors qu'il est encore suffisamment chaud, ledit matériau présentant une température de fléchissement sous contrainte supérieure ou égale à 30°C (norme ISO75f HDT sous 1,8 MPa) et de préférence inférieure ou égale à 60°C, mieux comprise entre 40 et 50°C.

14. Procédé de fabrication d'un masque selon l'une quelconque des revendications précédentes, dans lequel la technique de fabrication du masque est une technique de fabrication additive ou une technique de moulage par injection.

15. Procédé selon la revendication précédente, un lot de plusieurs coques (10) de masques empilés étant réalisé par fabrication additive dans une même cuve de fabrication,
et/ou dans lequel la fabrication du masque s'effectue par une technique de fabrication additive et dans lequel on génère un fichier permettant de commander une imprimante 3D utilisée pour la fabrication de la coque (10), à partir d'informations sur la morphologie de la personne destinée à porter le masque, en particulier à partir d'un scan 3D au moins partiel du visage de celle-ci.

## Patentansprüche

1. Atemschutzmaske (1), aufweisend:
- eine Schale (10) aus Kunststoff, die auf das Gesicht zu setzen ist, wobei diese Schale einen vorderen Abschnitt aufweist, der mit einem Bereich zur Aufnahme (17) eines Elements zum Halten eines Filtermaterials (30) versehen ist,
**dadurch gekennzeichnet, dass** die Schale einen weichen hinteren Abschnitt (11) ohne angesetzte Dichtung aufweist, der einen hinteren Rand (19) aufweist, der geeignet ist, sich an die Form des Gesichts anzupassen, wobei der hintere Abschnitt (11) auf wenigstens einem Abschnitt seines Umfangs mit einer Wanddicke (e) zwischen 0,15 und 0,5 mm ausgebildet ist.

2. Maske nach Anspruch 1, wobei der vordere Abschnitt zwei seitliche Ausbauchungen (12a, 12b) aufweist, deren hintere Enden (70) vom hinteren Rand (19) der Schale entfernt sind und vorne am Aufnahmebereich (17) verbunden sind.

3. Maske nach einem der Ansprüche 1 und 2, wobei der hintere Abschnitt (11) mit einer Wanddicke zwischen 0,15 und 0,5 mm über seinen gesamten Umfang, besser zwischen 0,15 und 0,4 mm, besser noch zwischen 0,15 und 0,35 mm ausgebildet ist, und/oder die Schale (10) eine Materialdicke auf ihrem hinteren Rand (19), der im direkten Kontakt mit der Haut steht, von weniger als 0,3 mm aufweist und/oder der hintere Abschnitt der Schale mit einem abgerundeten Rand (19) endet, der nach außen gerichtet ist.

4. Maske nach einem der vorhergehenden Ansprüche, wobei das Element (20) zum Halten des Filtermaterials (30) einen Abschnitt (21) zur Befestigung an der Schale (10), der einen Sitz zur Aufnahme des Filtermaterials definiert, und einen Abschnitt zum Rückhalt (22) des Filtermaterials aufweist, der dazu ausgebildet ist, an dem Befestigungsabschnitt befestigt werden, wobei der Rückhalteabschnitt (22) vorzugsweise durch ein Scharnier (23) mit dem Befestigungsabschnitt (21) verbunden ist, wobei der Sitz zur Aufnahme des Filtermaterials (30) vorzugsweise eine kreisförmige Kontur aufweist, die geeignet ist, eine Filtermaterialscheibe aufzunehmen.

5. Maske nach einem der vorhergehenden Ansprüche, wobei die Schale (10) vorne mit einem Gitter (80; 98) gebildet ist, das mit dem Rest davon einstückig ausgebildet ist.

6. Maske nach einem der vorhergehenden Ansprüche, wobei das Element zum Halten (20) des Filtermaterials (30) dafür angeordnet ist, durch eine Gewinde-, Rast-, Kegelan-Kegel- oder Bajonett-Befestigung an der Schale angebracht zu werden.

7. Maske nach einem der vorhergehenden Ansprüche, wobei das Halteelement (20) dafür angeordnet ist, das Filtermaterial (30) nach Anbringung gegen die Schale (10) zu drücken.

8. Maske nach einem der Ansprüche 1 bis 3, wobei das Element zum Halten des Filtermaterials dafür angeordnet ist, von innen an der Schale befestigt zu werden, wobei das Halteelement (20) vorzugsweise ringförmig ist, wobei das Element zum Halten (20) des Filtermaterials vorzugsweise dafür angeordnet ist, an der Schale befestigt zu werden, indem das Filtermaterial gegen die Schale geklemmt oder gedrückt wird, um dessen Halt zu gewährleisten.

9. Maske nach einem der Ansprüche 1 bis 3, wobei das Halteelement dafür angeordnet ist, von außen an der Schale befestigt zu werden, wobei das Element zum Halten (20) des Filtermaterials vorzugsweise dafür angeordnet ist, an der Schale befestigt zu werden, indem das Filtermaterial gegen die Schale geklemmt oder gedrückt wird, um dessen Halt zu gewährleisten.

10. Maske nach einem der vorhergehenden Ansprüche, aufweisend zwei mit der Schale einstückig ausgebildete Knöpfe (13) zur Befestigung eines vorzugsweise einzelnen Gummibands (40), wobei diese Knöpfe vorzugsweise einen ovalen Kopf aufweisen, der in einer Richtung senkrecht zur Zugrichtung des Gummibands langgestreckt ist.

11. Maske nach einem der vorhergehenden Ansprüche, mit Rückbezug auf Anspruch 2, wobei das hintere Ende der Ausbauchungen (12a, 12b) um einen Abstand (d) von wenigstens 15 mm vom hinteren Rand (19) der Schale entfernt ist, und/oder der Krümmungsradius (R) der seitlichen Ausbauchungen (12a, 12b) an ihrem Scheitelpunkt und auf mittlerer Länge dieser zwischen 20 und 30 mm liegt, und/oder
die seitlichen Ausbauchungen (12a, 12b) die gleiche Materialdicke wie der hintere Abschnitt (11) der Schale aufweisen, wenigstens auf dem größeren Teil ihrer Länge, und/oder die seitlichen Ausbauchungen (12a, 12b) einen Freiwinkel zwischen 10 und 20° aufweisen, und/oder
der hintere Abschnitt (11) einen Freiwinkel über jenem der seitlichen Ausbauchungen (12a, 12b) aufweist, wenigstens an den Seiten, und/oder
die seitlichen Ausbauchungen (12a, 12b) vorne mit einem dickeren Hals (16) verbunden sind, der wenigstens teilweise den Aufnahmebereich (17) definiert.

12. Maske nach einem der vorhergehenden Ansprüche, wobei wenigstens die Schale aus Polyamid 11 hergestellt ist, das eventuell ein biozides Mittel enthält, wobei die Schale vorzugsweise aus einem Material hergestellt ist, das in die Spülmaschine gegeben und/oder im Autoklav sterilisiert werden kann.

13. Maske nach einem der vorhergehenden Ansprüche, wobei die Schale vorne eine Öffnung aufweist, die den Luftdurchtritt mit dem Inneren der Maske ermöglicht, und die Maske ein abnehmbares Schutzvisier aus transparentem Kunststoff aufweist, durch welches ein Schnitt hindurchgeht, mit dem es vorne an der Maske befestigt werden kann, so dass die Öffnung der Maske an der Außenseite des Visiers mündet, und/oder die Schale aus einem thermoformbaren Material hergestellt ist, das durch Erhitzen über eine bestimmte Temperatur in einen Zustand gebracht werden kann, der es ihr ermöglicht, sich unter mechanischer Belastung permanent zu verformen, wodurch die Maske an die Form des Gesichts angepasst werden kann, indem sie erhitzt und dann an das Gesicht gedrückt wird, während sie noch ausreichend warm ist, wobei das Material eine Wärmeformbeständigkeitstemperatur größer als oder gleich 30 °C (Norm ISO75f HDT bei 1,8 MPa) und vorzugsweise kleiner als oder gleich 60 °C, besser zwischen 40 und 50 °C aufweist.

14. Verfahren zur Fertigung einer Maske nach einem der vorhergehenden Ansprüche, wobei die Technik zur Fertigung der Maske eine additive Fertigungstechnik oder eine Spritzgusstechnik ist.

15. Verfahren nach dem vorhergehenden Anspruch, wobei eine Charge aus mehreren gestapelten Maskenschalen (10) durch additive Fertigung in ein und demselben Fertigungsbehälter hergestellt wird,
und/oder wobei die Fertigung der Maske durch eine additive Fertigungstechnik erfolgt und wobei eine Datei erzeugt wird, mit der ein 3D-Drucker, der für die Fertigung der Schale (10) genutzt wird, anhand von Informationen über die Morphologie der Person gesteuert werden kann, die die Maske tragen soll, insbesondere anhand eines wenigstens teilweisen 3D-Scans des Gesichts derselben.

## Claims

1. Respiratory protective mask (1), comprising:
- a plastic shell (10) to be placed on the face, this shell comprising a front part provided with a region (17) for receiving an element for holding a filtering material (30),
**characterized in that** the shell comprises a flexible rear part (11) without attached seal, having a rear edge (19) adapted to match the shape of the face, the rear part (11) being produced with a wall thickness (e) of between 0.15 and 0.5 mm over at least part of its periphery.

2. Mask according to Claim 1, the front part comprising two lateral bosses (12a, 12b) whose rear ends (70) are spaced apart from the rear edge (19) of the shell and connected at the front to said receiving region (17).

3. Mask according to one of Claims 1 and 2, the rear part (11) being produced with a wall thickness of between 0.15 and 0.5 mm over its whole periphery, better still of between 0.15 and 0.4 mm, even better still of between 0.15 and 0.35 mm, and/or the shell (10) having a material thickness, on its rear edge (19) in contact with the skin, of less than 0.3 mm, and/or the rear part of the shell terminating in an outwardly directed rounded edge (19).

4. Mask according to any one of the preceding claims, the element (20) for holding the filtering material (30) comprising a part (21) for fastening to the shell (10), defining a housing for receiving the filtering material, and a part (22) for retaining the filtering material, configured to be fastened to the fastening part, the retaining part (22) preferably being connected by a hinge (23) to the fastening part (21), the housing for receiving the filtering material (30) preferably being of circular contour and adapted to receive a disc of filtering material.

5. Mask according to any one of the preceding claims, the shell (10) being formed at the front with a grid (80; 98) integral with the remainder thereof.

6. Mask according to any one of the preceding claims, the element (20) for holding the filtering material (30) being designed to be mounted on the shell by a screw-thread fastening, by snap-fastening, by cone-on-cone fastening or by bayonet-type fastening.

7. Mask according to any one of the preceding claims, the holding element (20) being designed to press the filtering material (30) against the shell (10) once mounted.

8. Mask according to any one of Claims 1 to 3, the element for holding the filtering material being designed to be fastened from the inside to the shell, the holding element (20) preferably being in the form of a ring, the element (20) for holding the filtering material preferably being designed to be fastened to the shell while clamping or pressing the filtering material against the shell so as to ensure that it is held.

9. Mask according to any one of Claims 1 to 3, the holding element being designed to be fastened from the outside to the shell, the element (20) for holding the filtering material preferably being designed to be fastened to the shell while clamping or pressing the filtering material against the shell so as to ensure that it is held.

10. Mask according to any one of the preceding claims, comprising two buttons (13) integral with the shell, for fastening a, preferably single, elastic band (40), these buttons preferably having an oval head which is elongate in a direction perpendicular to the pulling direction of the elastic band.

11. Mask according to any one of the preceding claims with reference to Claim 2, the rear end of the bosses (12a, 12b) being spaced apart by a distance (d) of at least 15 mm from the rear edge (19) of the shell and/or the radius of curvature (R) of the lateral bosses (12a, 12b) at their top and midway along their length being between 20 and 30 mm, and/or
the lateral bosses (12a, 12b) having the same material thickness as the rear part (11) of the shell, at least over most of their length, and/or
the lateral bosses (12a, 12b) having a taper of between 10 and 20°, and/or
the rear part (11) having a taper greater than that of the lateral bosses (12a, 12b), at least on the sides, and/or
the lateral bosses (12a, 12b) being connected at the front to a thicker neck (16), at least partially defining the receiving region (17).

12. Mask according to any one of the preceding claims, the shell at least being made of polyamide 11, possibly incorporating a biocidal agent, the shell preferably being made of a material which can be placed in a dishwasher and/or sterilized in an autoclave.

13. Mask according to any one of the preceding claims, the shell having at the front an opening allowing the passage of air with the interior of the mask and the mask comprising a removable protective visor made of transparent plastic traversed by a cutout allowing it to be fastened to the front of the mask, in such a way that the opening of the mask opens onto the outer side of the visor, and/or the shell being produced of a thermoformable material which can be brought, by heating it beyond a given temperature, into a state allowing it to be permanently deformed under mechanical stress, thereby making it possible to configure the mask to the shape of the face by heating it and then pressing it onto the face when it is still sufficiently hot, said material having a deflection temperature under load greater than or equal to 30°C (standard ISO75f HDT under 1.8 MPa) and preferably less than or equal to 60°C, better still between 40 and 50°C.

14. Method for manufacturing a mask according to any one of the preceding claims, in which the technique for manufacturing the mask is an additive manufacturing technique or an injection-moulding technique.

15. Method according to the preceding claim, a batch of a plurality of shells (10) of stacked masks being produced by additive manufacturing in one and the same manufacturing tank,
and/or wherein the mask is manufactured by an additive manufacturing technique and wherein a file is generated for controlling a 3D printer used for the manufacture of the shell (10) from information on the morphology of the person intended to wear the mask, in particular from an at least partial 3D scan of the face of said person.
